# EUROPEAN PATENT SPECIFICATION

(11) **EP 2 342 116 B1**
(45) Date of publication and mention of the grant of the patent: **23.09.2015**
(21) Application number: 09823902.3
(22) Date of filing: 23.10.2009
(51) Int. Cl.: B62D 1/18, B62D 1/183

(54) **STEERING DEVICE**
LENKVORRICHTUNG
AGENCEMENT DE DIRECTION

(30) Priority: 31.10.2008 SE 0802315
(43) Date of publication of application: 13.07.2011
(73) Proprietor: Cargotec Patenter AB, 341 81 Ljungby (SE)
(72) Inventor: EKLUND, Sven-Gunnar, S-341 39 Ljungby (SE); GARTNELL, Lars, S-302 73 Halmstad (SE)
(74) Representative: Reiner, Per Jörgen
(86) International application number: PCT/SE2009/051212
(87) International publication number: WO 2010/050882

(56) References cited:
- EP-A1- 0 481 432
- EP-A1- 0 481 432
- WO-A1-2007/073261
- DE-A1- 10 356 278
- SU-A1- 1 463 610
- US-A- 4 495 833

## Description

The present invention relates to a steering arrangement in accordance with the preamble of claim 1.

The invention particularly relates to a steering arrangement for a load handling vehicle, and then especially for a counterbalance truck.

In a counterbalance truck, the working conditions are unique. During load handling, the operator of the counterbalance truck usually operates the controls of the truck (fork control, etc.) with one of his hands, at the same time as he operates the steering wheel with his other hand. It has been found that this single sided operation of the steering wheel, together with the position of a conventional steering wheel, risk causing repetitive strain injuries of the arm handling the steering wheel and the shoulder thereof.

US 2006/0037790 A1 discloses a counterbalance truck in the form of a forklift truck, where the plane of the steering wheel, or rather the plane of the steering disc, lies in the vertical plane and is pivoted outward, away from the operator. By means of this steering arrangement, an ergonomically correct working position can be obtained during load handling.

However, the steering arrangement according to US 2006/0037790 A1 exhibits the disadvantage that it provides a less suitable working position for transport operation, i.e. when the forklift truck is driven without simultaneous load handling, for example when the operator drives the forklift truck between load handling situations. During such driving, most operators prefer a conventionally positioned steering wheel, i.e. a steering wheel positioned so that its axis of rotation is inclined toward the operator, without being inclined in the lateral direction, since the operator then can use both hands for steering the forklift truck.

A steering arrangement which allows adjustment of the steering wheel between different positions is disclosed in EP 0 481 432 A1. In this steering arrangement, the steering wheel is mounted on an arm, which is provided with lockable ball couplings at each end. By means of the lockable ball couplings, the steering wheel can be adjusted so that, on the one hand, it can be angled to obtain an ergonomically correct working position during load handling, and, on the other hand, can be set to a normal, conventional position, where the axis of rotation of the steering wheel is parallel to the centre plane of the forklift truck.

However, the steering arrangement according to EP 0 481 432 A1 has the disadvantage that it is difficult, with ball couplings, for an operator to set a previously found, comfortable position when changing between different positions of the steering wheel. It is, for example, difficult for an operator to set exactly the same load handling position repeatedly. Furthermore, it is difficult, with ball couplings, to achieve the stability required for a steering arrangement.

Accordingly, the object of the present invention is to produce an alternative steering arrangement, which allows stable, simple and safe adjustment of the steering wheel to a suitable load handling position, on the one hand, and to a suitable driving position, on the other hand.

The steering arrangement according to the invention is characterized by the features of the characterizing portion of claim 1.

In the following, the steering arrangement according to the invention will be described more closely with reference to the attached drawings.
Figure 1 shows a steering arrangement according to the invention.
Figure 2 shows the steering arrangement of Figure 1 in a side view.
Figure 3 shows a steering rotary actuator of the steering arrangement of Figure 1.
Figure 4 shows the steering rotary actuator of Figure 3 in a side view.
Figure 5 shows the steering arrangement of Figure 1 in a side view.
Figure 6 shows the steering arrangement of Figure 1 in a top view.

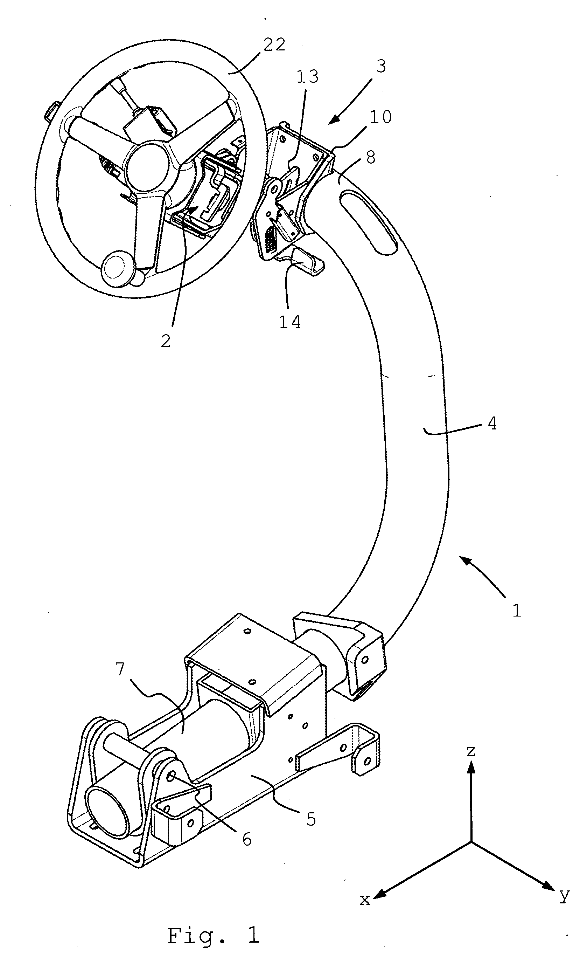

Figures 1-6 show a steering arrangement according to the invention, which is intended for mounting in an operator's position of a counterbalance truck. In the following description of the steering arrangement, directional and angular specifications will be given based on the coordinate system shown in Fig. 1, i.e. a coordinate system where the y-axis coincides with the transverse direction of the operator's position, the x-axis with its length direction, and the z-axis with its height direction. Accordingly, the operator's position exhibits a floor plane, which is parallel to the plane defined by the x- and y-axes, and a centre plane, which is parallel to the plane defined by the x- and z-axes.

The steering arrangement 1 comprises a steering rotary actuator 2, a holder 3, a supporting arm 4, and a fixing device 5.

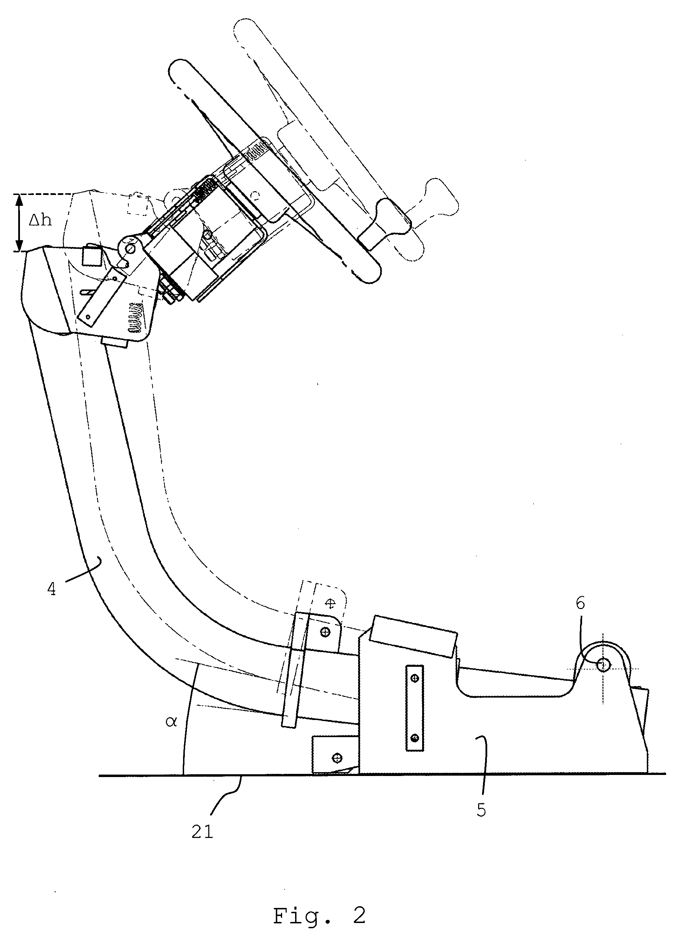

The fixing device 5 is fixedly connected to a floor portion 21 of the operator's position (see Fig. 2). At its lower end, the supporting arm 4, which is elongated, is pivotally attached to the fixing device 5. For this purpose, the fixing device 5 comprises a pivot joint 6, extending in the transverse direction of the operator's position. Accordingly, the pivot joint 6 enables a pivoting movement of the supporting arm 4 in a plane being parallel to the centre plane of the operator's position. In this plane, the supporting arm 4 can be steplessly adjusted, between predetermined end positions, to a desired angle α relative to the floor plane, so that a desired height of the upper end of the supporting arm 4 above the floor portion 21 can be obtained. In order to provide sufficient adjustment range for the supporting arm 4, the angular measurement between these end positions should be so large that the upper portion of the supporting arm 4 can be vertically adjusted within a predetermined interval of Δh, which should preferably be at least 10-20 cm (see Fig. 2). By means of a hand-operated locking means (not shown), the operator of the counterbalance truck can lock the supporting arm 4 at a desired angle α.

The supporting arm 4 is tubular and exhibits a substantially straight lower portion 7, where the supporting arm 4 is attached to the fixing device 5, and an upper portion 8, which curves upwardly and to the left as viewed in the length direction of the operator's position (see Fig. 1). This shape of the supporting arm 4 enables a positioning of the fixing device 5 immediately to the right of the driver's seat (not shown) of the operator's position.

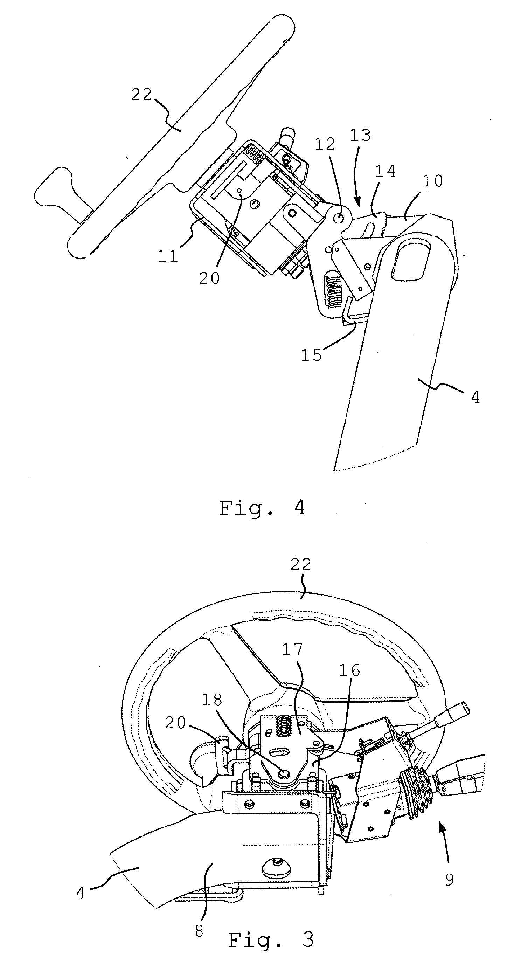

The holder 3 is arranged at the upper end of the supporting arm 4. The steering rotary actuator 2 comprises a steering wheel 22, which is rotatably mounted in the holder 3. Also other controls 9 (see Fig. 3), for driving the counterbalance truck, are arranged on the holder 3, which controls 9 e.g. can comprise control levers for direction indicators and forward/reverse switch. Preferably, signal and servo lines from the steering rotary actuator 2 and the controls 9 run protected inside the tubular supporting arm 4.

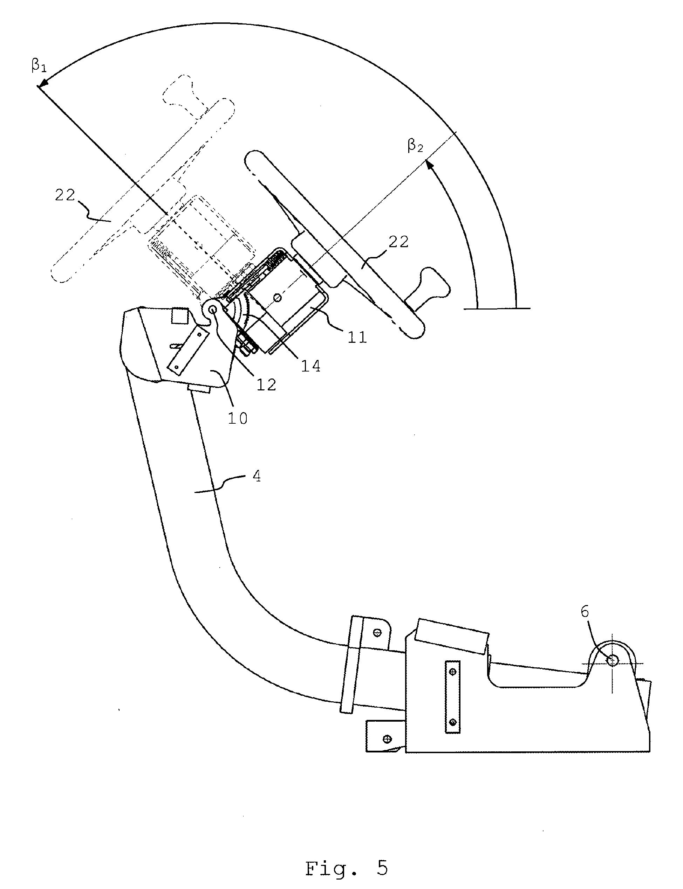

The holder 3 comprises a first, lower holder part 10, which is fixedly connected to the upper end of the supporting arm 4, and a second, upper holder part 11, in which the steering wheel 22 is rotatably mounted. The upper holder part 11 is pivotally connected to the lower holder part 10 in a first pivot joint 12 of the holder 3, said pivot joint 12 extending in the transverse direction of the counterbalance truck. Accordingly, the pivot joint 12 enables a pivoting movement of the upper holder part 11 in a plane being parallel to the centre plane of the operator's position. In this plane, the upper holder part 11 can be adjusted, between predetermined end positions, so that a desired angle β between the axis of rotation of the steering wheel and the floor plane is obtained (see Fig. 5).

A first latch means 13 of the holder 3 is adapted to form a releasable connection between the holder parts 10 and 11, said first latch means 13 comprising an external gear rim 14 of the upper holder part 11 and a spring-loaded hand lever 15 of the lower holder part 10. In the locked position of the latch means 13, the hand lever 15 is engaged with the gear rim 14, but by operating the hand lever 15, the operator can release this engagement, wherein the operator is free to pivot the upper holder part 11 about the pivot joint 12 and to set the holder part 11 in a position between a first end position, shown with continuous lines in Fig. 5, and a second end position, shown with dashed lines.

In the first end position, the holder part 11 is angled toward the driver's seat. Accordingly, the axis of rotation of the steering wheel is inclined toward the driver's seat in this end position. In the second end position, the holder part 11 is angled away from the driver's seat and, accordingly, the axis of rotation is inclined away from the driver's seat in the second end position. In the second end position, a free space is thus created in front of the driver's seat. The operator sets the upper holder part 11 to this second end position or to a position adjacent to the second end position, in order to facilitate entry to or exit from the operator's position. Accordingly, the second end position and adjacent positions represent entry and exit positions of the holder part 11. When the operator has seated himself in the driver's seat in order to drive the counterbalance truck, he folds the holder part 11 backward from the existing entry and exit position to the first end position, or to a position adjacent to the first end position. Accordingly, the first end position and adjacent positions represent driving positions of the holder part 11.

The above-mentioned entry and exit positions are defined by a first angle β₁ between the axis of rotation of the steering wheel and the floor plane which is preferably within the interval of 90-140° (see Fig. 5). The driving positions are defined by a second angle β₂ between the axis of rotation of the steering wheel and the floor plane which is preferably within the interval of 30-55° (see Fig. 5). Accordingly, as viewed relative to the operator's position, an angular value of β within the interval of 0-90° implies that the axis of rotation of the steering wheel points backward, and an angular value within the interval of 90-180° that the axis of rotation points forward.

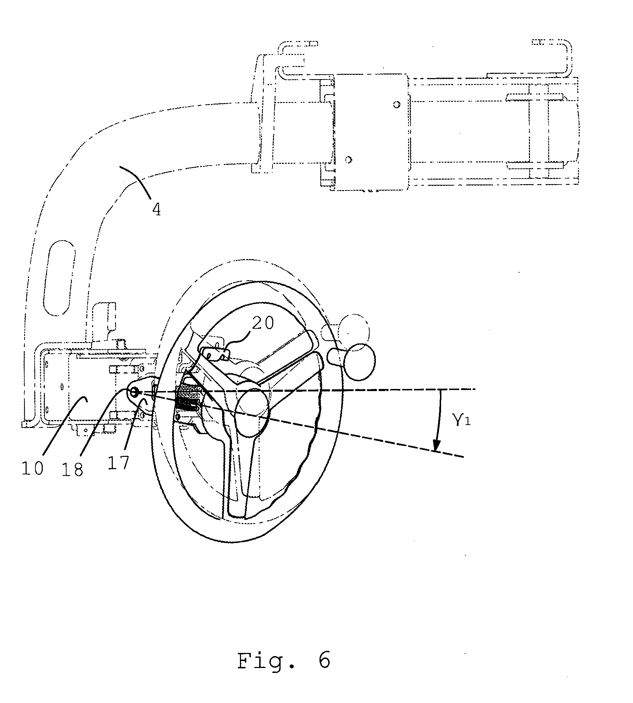

The upper holder part 11 comprises a first, lower holder portion 16, which is connected to the lower holder part 10 in said first pivot joint 12, and a second, upper holder portion 17, which is pivotally connected to the lower holder portion 16 in a second pivot joint 18 of the holder 3. The second pivot joint 18 is perpendicular to the first pivot joint 12 and thus extends in a plane being parallel to the centre plane of the operator's position. The steering wheel 22 is pivotally mounted in the upper holder portion 17. Accordingly, by means of the pivot joint 18, the angle γ between the axis of rotation of the steering wheel 22 and the centre plane of the counterbalance truck can be adjusted (see Fig. 6).

A second latch means 19 of the holder 3 is adapted to form a releasable connection between the holder portions 16 and 17, said second latch means 19 comprising an external gear rim (not shown) of the lower holder portion 16, and a spring-loaded hand lever 20 of the upper holder portion 17. In the locked position of the second latch means 19, the hand lever 20 is engaged with the gear rim of the lower holder portion 16. By operating the hand lever 20, the operator can release this engagement, wherein the operator is free to pivot the upper holder portion 17 about the pivot joint 18 and set it in a position between a first end position, shown with continuous lines in Fig. 6, and a second end position, shown with dashed lines in Fig. 6. In the first end position, the axis of rotation of the steering wheel forms a first angle γ₁ with the centre plane which is preferably within the interval of 5-20°. In the second end position, the axis of rotation forms a second angle γ₂ with the centre plane which is preferably between -4° and 4°. In other words, the axis of rotation is substantially parallel to the centre plane in the second end position.

Accordingly, as viewed from the operator's position, the steering wheel is angled to the left when the upper holder portion 17 is in the first end position. This first end position, and positions adjacent to this end position, provide an ergonomically correct working position during load handling when the operator steers the counterbalance truck with his left hand and manipulates controls with his right hand. Accordingly, the first end position and positions adjacent to this end position represent load handling positions of the steering wheel 22.

Trials have shown that the first angle γ between the axis of rotation of the steering wheel and the centre plane should preferably be within the interval of 5-15°, and most preferably about 10°, in order to obtain an ergonomically correct working position during load handling.

In the second end position of the upper holder portion 17, the steering wheel 22 has a normal, conventional position, where the axis of rotation of the steering wheel is substantially parallel to the centre plane of the operator's position. The operator selects this second end position when he will drive the counterbalance truck without simultaneous load handling, i.e. when he uses both the left and right hand for operating the steering wheel 22. Accordingly, the second end position represents a driving position of the steering wheel 22.

Accordingly, in the steering arrangement according to the invention, the pivot joint 6 enables a translational movement of the axis of rotation of the steering wheel in a plane being parallel to the centre plane. The pivot joint 12 enables an adjustment of angle β between the axis of rotation of the steering wheel and the floor plane, and the pivot joint 18 enables an adjustment of angle γ between the axis of rotation of the steering wheel and the centre plane. This enables the operator to quickly and easily set the steering wheel to an entry and exit position when entering and exiting the operator's position, to a load handling position when steering in connection with load handling, and to a driving position for transport operation. By means of these adjustment possibilities, the operator obtains a safe and comfortable operator's environment, which allows the operator to avoid repetitive strain injuries.

Accordingly, in a steering arrangement according to the invention, the adjustments of the steering wheel in different planes and directions are separated. This makes it easy for the operator to return to a previously found comfortable entry and exit position, load handling position, or driving position.

In the foregoing, the invention has been described based on a specific embodiment. It is appreciated, however, that other embodiments and variants are possible within the scope of the invention. In the shown embodiment, for instance, the gear rims of the latch means limit the positions in which the holder part 11 and the holder portion 17, respectively, can be set. Engagement between the respective gear rim and hand lever is obtained only at a plurality of predetermined, discrete positions. However, it is appreciated that with a different design of the latch means, the positions of the holder part 11 and the holder portion 17 between their respective end positions can be selected freely.

## Claims

1. A steering arrangement (1) in an operator's position of a load handling vehicle, said steering arrangement (1) comprising, on the one hand, an elongated supporting arm (4) which comprises a lower portion (7) where the supporting arm (4) is attached to a floor portion (21) of the operator's position and an upper portion (8) projecting upwardly from the floor portion (21), and, on the other hand, a holder (3) which is arranged at the upper portion (8) of the supporting arm (4), and also a steering rotary actuator (2) for steering the vehicle, said steering rotary actuator (2) being supported by the holder (3), **characterized in that** the holder (3) comprises a first holder part (10) which is fixedly connected to the upper portion (8) of the supporting arm (4), and a second holder part (11) comprising, on the one hand, a first holder portion (16) which is pivotally and lockably connected to the first holder part (10) in a first pivot joint (12) extending in the transverse direction of the operator's position, and, on the other hand, a second holder portion (17) which is pivotally and lockably connected to the first holder portion (16) in a second pivot joint (18) being perpendicular to the first pivot joint (12), in which second holder portion (17) the steering rotary actuator (2) is pivotally mounted.

2. The steering arrangement (1) according to claim 1, **characterized in that** the first pivot joint (12) enables an adjustment of the steering rotary actuator (2) between an entry and exit position, which is defined by a first angle β₁ between the axis of rotation of the steering rotary actuator (2) and the floor plane of the operator's position, and a driving position, which is defined by a second angle β₂ between the axis of rotation of the steering rotary actuator (2) and the floor plane, wherein the first angle β₁ is within the interval of 90-140° and the second angle β₂ is within the interval of 20-50°.

3. The steering arrangement (1) according to any one of the claims 1 and 2, **characterized in that** the second pivot joint (18) enables an adjustment of the steering rotary actuator (2) between a load handling position, which is defined by a first angle γ₁ between the axis of rotation of the steering rotary actuator (2) and the centre plane of the operator's position, and a driving position, which is defined by a second angle γ₂ between the axis of rotation of the steering rotary actuator (2) and the centre plane, wherein the first angle γ₁ is within the interval of 5-20° and the second angle γ₂ is between -4° and 4°.

4. A load handling vehicle, **characterized in that** it comprises a steering arrangement according to any one of the claims 1-3.

5. The load handling vehicle according to claim 4, **characterized in that** it is a counterbalance truck.

## Patentansprüche

1. Lenkanordnung (1) an einer Bedienerposition eines Lastaufnahmefahrzeugs, wobei die Lenkanordnung (1) an der einen Seite einen länglichen Trägerarm (4), der einen unteren Abschnitt (7), wo der Trägerarm (4) an einem Bodenabschnitt (21) der Bedienerposition angebracht ist, und einen oberen Abschnitt (8), der vom Bodenabschnitt (21) nach oben hervorragt, umfasst, und an der anderen Seite eine Halterung (3), die am oberen Abschnitt (8) des Trägerarms (4) angeordnet ist, sowie ein Lenk-Dreh-Stellglied (2) zum Lenken des Fahrzeugs umfasst, wobei das Lenk-Dreh-Stellglied (2) von der Halterung (3) getragen wird, **dadurch gekennzeichnet, dass** die Halterung (3) einen ersten Halterungsteil (10), der fest mit dem oberen Abschnitt (8) des Trägerarms (4) verbunden ist, und einen zweiten Halterungsteil (11) umfasst, der an der einen Seite einen ersten Halterungsabschnitt (16), der schwenkbar und verriegelbar mit dem ersten Halterungsteil (10) in einem ersten Schwenkgelenk (12) verbunden ist, das sich in die Querrichtung der Bedienerposition erstreckt, und an der anderen Seite einen zweiten Halterungsabschnitt (17) umfasst, der schwenkbar und verriegelbar mit dem ersten Halterungsabschnitt (16) in einem zweiten Schwenkgelenk (18) verbunden ist, das senkrecht zum ersten Schwenkgelenk (12) ist, wobei am zweiten Halterungsabschnitt (17) das Lenk-Dreh-Stellglied (2) schwenkbar montiert ist.

2. Lenkanordnung (1) nach Anspruch 1, **dadurch gekennzeichnet, dass** das erste Schwenkgelenk (12) eine Anpassung des Lenk-Dreh-Stellglieds (2) zwischen einer Eingangs- und einer Ausgangsposition, die von einem ersten Winkel β₁ zwischen der Drehachse des Lenk-Dreh-Stellglieds (2) und der Bodenebene der Bedienerposition definiert wird, und einer Fahrposition, die von einem zweiten Winkel β₂ zwischen der Drehachse des Lenk-Dreh-Stellglieds (2) und der Bodenebene definiert wird, ermöglicht, wobei der erste Winkel β₁ im Bereich von 9-140° und der zweite Winkel β₂ im Bereich von 20-50° liegt.

3. Lenkanordnung (1) nach einem der Ansprüche 1 und 2, **dadurch gekennzeichnet, dass** das zweite Schwenkgelenk (18) eine Anpassung des Lenk-Dreh-Stellglieds (2) zwischen einer Lastaufnahmeposition, die von einem ersten Winkel γ₁ zwischen der Drehachse des Lenk-Dreh-Stellglieds (2) und der Mittelebene der Bedienerposition definiert wird, und einer Fahrposition, die von einem zweiten Winkel γ₂ zwischen der Drehachse des Lenk-Dreh-Stellglieds (2) und der Mittelebene definiert wird, ermöglicht, wobei der erste Winkel γ₁ im Bereich von 5-20° und der zweite Winkel γ₂ im Bereich von -4° und 4° liegt.

4. Lastaufnahmefahrzeug, **dadurch gekennzeichnet, dass** es eine Lenkanordnung nach einem der Ansprüche 1-3 umfasst.

5. Lastaufnahmefahrzeug nach Anspruch 4, **dadurch gekennzeichnet, dass** es ein Gegengewichtsstapler ist.

## Revendications

1. Dispositif de direction (1) dans une position du conducteur d'un véhicule de manutention, ledit dispositif de direction (1) comprenant, d'une part, un bras de support allongé (4) qui comprend une partie inférieure (7) où le bras de support (4) est fixé à une partie de plancher (21) de la position du conducteur et une partie inférieure (8) faisant saillie vers le haut à partir de la partie de plancher (21), et, d'autre part, un dispositif de maintien (3) qui est disposé au niveau de la partie supérieure (8) du bras de support (4), ainsi qu'un actionneur rotatif de direction (2) pour diriger le véhicule, ledit actionneur rotatif de direction (2) étant supporté par le dispositif de maintien (3), **caractérisé en ce que** le dispositif de maintien (3) comprend une première partie de maintien (10) qui est reliée de manière fixe à la partie supérieure (8) du bras de support (4), et une deuxième partie de maintien (11) comprenant, d'une part, une première partie de maintien (16) qui est reliée de manière pivotante et verrouillable à la première partie de maintien (10) dans un premier joint pivotant (12) qui s'étend dans la direction transversale de la position du conducteur, et, d'autre part, une deuxième partie de maintien (17) qui est reliée de manière pivotante et verrouillable à la première partie de maintien (16) dans un deuxième joint pivotant (18) perpendiculaire au premier joint pivotant (12), l'actionneur rotatif de direction (2) étant monté de manière pivotante dans ladite deuxième partie de maintien (17).

2. Dispositif de direction (1) selon la revendication 1, **caractérisé en ce que** le premier joint pivotant (12) permet un réglage de l'actionneur rotatif de direction (2) entre une position d'entrée et de sortie, qui est définie par un premier angle β₁ entre l'axe de rotation de l'actionneur rotatif de direction (2) et le plan de plancher de la position du conducteur, et une position d'entraînement, qui est définie par un deuxième angle β₂ entre l'axe de rotation de l'actionneur rotatif de direction (2) et le plan de plancher, dans lequel le premier angle β₁ est compris dans l'intervalle entre 90 et 140° et le deuxième angle β₂ est compris dans l'intervalle entre 20 et 50°.

3. Dispositif de direction (1) selon l'une quelconque des revendications 1 et 2, **caractérisé en ce que** le deuxième joint pivotant (18) permet un réglage de l'actionneur rotatif de direction (2) entre une position de manutention, qui est définie par un premier angle Y₁ entre l'axe de rotation de l'actionneur rotatif de direction (2) et le plan central de la position du conducteur, et une position d'entraînement, qui est définie par un deuxième angle Y₂ entre l'axe de rotation de l'actionneur rotatif de direction (2) et le plan central, dans lequel le premier angle Y₁ est compris dans l'intervalle entre 5 et 20° et le deuxième angle Y₂ est compris entre -4° et 4°.

4. Véhicule de manutention, **caractérisé en ce qu**'il comprend un dispositif de direction selon l'une quelconque des revendications 1 à 3.

5. Véhicule de manutention selon la revendication 4, **caractérisé en ce qu'**il s'agit d'un camion à contrepoids.
